(19) **Europäisches Patentamt / European Patent Office / Office européen des brevets**

(11) **EP 4 266 243 A1**

(12) **EUROPEAN PATENT APPLICATION**
published in accordance with Art. 153(4) EPC

(43) Date of publication:
**25.10.2023 Bulletin 2023/43**

(21) Application number: **20966033.1**

(22) Date of filing: **18.12.2020**

(51) International Patent Classification (IPC):
**G06T 7/00** $^{(2017.01)}$

(52) Cooperative Patent Classification (CPC):
**G06T 7/00**

(86) International application number:
**PCT/JP2020/047561**

(87) International publication number:
**WO 2022/130647 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **UCHIDA, Hidetsugu**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **DETERMINATION METHOD, DETERMINATION PROGRAM, AND INFORMATION PROCESSING DEVICE**

(57)     A determination method implemented by a computer, the determination method including: in response to acquiring a primary image captured by a camera, calculating, based on a size of a region of the subject, an estimated value of a distance to a subject that is specified and included in the primary image; acquiring a secondary image captured by the camera focused on a position according to the calculated estimated value; and determining, based on the acquired secondary image, whether the subject is a display object.

FIG. 1

## Description

FIELD

The present disclosure relates to a determination method, a determination program, and an information processing device.

BACKGROUND

In the biometric authentication techniques, countermeasures are taken against impersonation using a display object or the like obtained by displaying an image of a living body by light emission or printing as a counterfeit.

As one of such countermeasures, a countermeasure using a camera that takes an image in a wavelength region of an infrared region and a countermeasure using a camera equipped with an imaging element incorporating an image plane phase difference sensor have been proposed.

However, since these cameras are premised on addition of hardware such as an infrared light source and an image plane phase difference sensor, there is an aspect that impersonation determination is not feasible with a general camera.

As one of techniques for inspecting impersonation with a general camera, a face collation device using a blur amount of an image has been proposed. For example, in the face collation device, when whether an image for use in collation is an impersonated image obtained by capturing a photograph is inspected before collation of faces, impersonation inspection is performed based on the blur amount in the inspection region set in the face portion in the image.

TECHNICAL PROBLEM

However, the face collation device described above has some characteristic that the determination accuracy for a counterfeit is deteriorated for reasons as follows.

That is, the above face collation device only performs the inspection of impersonation on the premise that the blur amount of the image in which the counterfeit is captured is larger than the blur amount of the image in which the real living body is captured. However, under the situation in which the resolution of the screen is progressing to higher resolution, the premise itself is not established, and a case where the blur amount becomes equivalent between the image in which the counterfeit is captured and the image in which the real living body is captured arises. In this case, recognition omission in which a counterfeit is determined as a living body occurs, and thus the determination accuracy for the counterfeit is deteriorated.

In one aspect, an object of the present disclosure is to provide a determination method, a determination program, and an information processing device capable of achieving improvement of the determination accuracy for a counterfeit.

SOLUTION TO PROBLEM

According to an aspect of the embodiments, there is provided a determination method implemented by a computer, the determination method including: in response to acquiring a primary image captured by a camera, calculating, based on a size of a region of the subject, an estimated value of a distance to a subject that is specified and included in the primary image; acquiring a secondary image captured by the camera focused on a position according to the calculated estimated value; and determining, based on the acquired secondary image, whether the subject is a display object.

ADVANTAGEOUS EFFECTS OF INVENTION

Improvement of the determination accuracy for a counterfeit may be achieved.

BRIEF DESCRIPTION OF DRAWINGS

FIG. 1 is a block diagram illustrating a functional configuration example of an information processing device according to a first embodiment.
FIG. 2 is a diagram illustrating an example of a primary image.
FIG. 3 is a schematic diagram illustrating an example of a distance gap.
FIG. 4 is a diagram illustrating an example of a secondary image.
FIG. 5 is a diagram illustrating an example of a tertiary image.
FIG. 6 is a flowchart illustrating a procedure of determination processing according to the first embodiment.
FIG. 7 is a diagram illustrating a hardware configuration example.

DESCRIPTION OF EMBODIMENTS

Hereinafter, a determination method, a determination program, and an information processing device according to the present application will be described with reference to the accompanying drawings. Note that the present embodiments do not limit the disclosed technique. Then, the embodiments can be appropriately combined with each other within a range that does not cause contradiction between processing contents.

[First Embodiment]

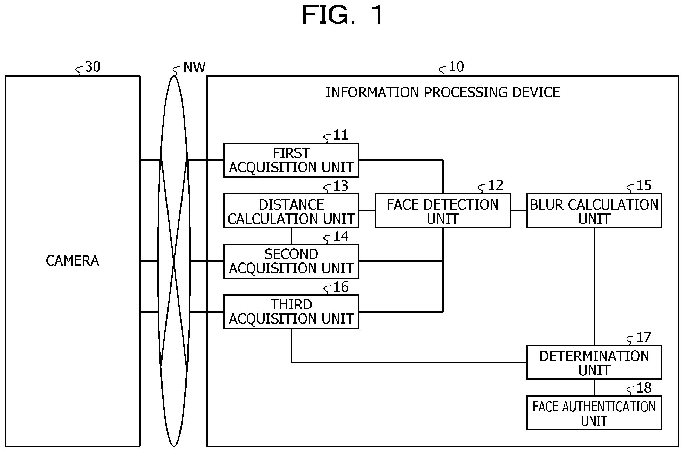

FIG. 1 is a block diagram illustrating a functional configuration example of an information processing device 10 according to a first embodiment. The information processing device 10 illustrated in FIG. 1 is an example of a computer that provides a determination function of determining whether or not a specified subject is a counterfeit from an image captured by a camera 30.

The above-mentioned determination function can be provided by being packaged as one function of a face authentication service that executes face authentication using an image captured by the camera 30, as a mere example. Note that the above determination function does not necessarily have to be packaged in the above-mentioned face authentication service and may be provided as one of modules included in a library referred to by the above face authentication service or another service.

The information processing device 10 can be implemented by installing a determination program that achieves the above determination function in any computer. As an example, the information processing device 10 can be implemented as a server that provides the above determination function on-premises. As another example, the information processing device 10 can also provide the above determination function as a cloud service by being implemented as a software as a service (SaaS) type application.

As illustrated in FIG. 1, the information processing device 10 can be coupled to the camera 30 via a network NW so as to enable communication. For example, the network NW can be any type of communication network such as the Internet or a local area network (LAN) regardless of whether the network NW is wired or wireless.

The camera 30 is an example of an imaging device equipped with an imaging element such as a charge coupled device (CCD) or a complementary metal oxide semiconductor (CMOS). Here, the camera 30 can be a general camera. In different terms, the camera 30 does not have to be equipped with hardware for use in recognition of a counterfeit, such as the infrared light source or the image plane phase difference sensor cited above in the background art section. Note that FIG. 1 gives an example in which one camera 30 is coupled to the information processing device 10, but this does not exclude any number of cameras 30 from being coupled to the information processing device 10.

Note that, while FIG. 1 will give an example in which the determination function mentioned above is provided by a client-server system as a mere example, this example is not restrictive, and the above determination function may be provided in a standalone manner.

Next, a functional configuration of the information processing device 10 according to the present embodiment will be described. In FIG. 1, blocks corresponding to functions included in the information processing device 10 are schematically depicted. As illustrated in FIG. 1, the information processing device 10 includes a first acquisition unit 11, a face detection unit 12, a distance calculation unit 13, a second acquisition unit 14, a blur calculation unit 15, a third acquisition unit 16, a determination unit 17, and a face authentication unit 18.

For example, the functional units such as the first acquisition unit 11, the face detection unit 12, the distance calculation unit 13, the second acquisition unit 14, the blur calculation unit 15, the third acquisition unit 16, the determination unit 17, and the face authentication unit 18 are virtually achieved by a hardware processor. As one of such processors, a central processing unit (CPU), a micro processing unit (MPU), or the like is exemplified. The processor reads a program such as a determination program that achieves the above-mentioned determination function and a face authentication program that achieves the above-mentioned face authentication service from a storage device (not illustrated) such as various storages as an example. After that, by executing the above-mentioned determination program or the above-mentioned face authentication program, the processor loads processes corresponding to the functional units mentioned above into a memory such as a random access memory (RAM). In this manner, as a result of execution of the above determination program or the above face authentication program, the above functional units are virtually achieved as processes. While the CPU and the MPU are explained as mere examples of the processor here, the functional units mentioned above may be achieved by any processor regardless of a versatile type or a dedicated type. Additionally, the above functional units or some of the above functional units may be achieved by a hard wired logic such as an application specific integrated circuit (ASIC) or a field programmable gate array (FPGA).

Note that FIG. 1 only illustrates an excerpt of the functional units related to the above determination function, and a functional unit other than the illustrated ones, such as a functional unit that an existing computer is supplied with by default or as an option, may be provided in the information processing device 10.

The first acquisition unit 11 is a processing unit that acquires a primary image. The "primary image" mentioned here refers to, as one aspect, an image captured first among images obtained by capturing the same person in time series. Hereinafter, an image captured second consecutively after the primary image will be sometimes referred to by the expression "secondary image", and furthermore, an image captured third consecutively after the secondary image will be sometimes referred to by the expression "tertiary image".

As a mere example, the first acquisition unit 11 sets a focal length S1 and depth of field D1 as follows in the camera 30 as parameters relating to the focus setting used by the camera 30 at the time of capturing the primary image. The "focal length" mentioned here refers to the distance between the optical center of the camera 30 and the imaging plane of the imaging element. In addition, the "depth of field" refers to a range of distance on the subject side that can be regarded as being in focus. Hereinafter, the focus setting used at the time of capturing the primary image will be sometimes referred to by the expression "first focus setting".

As one aspect, at the time of capturing the primary image, the focal length S1 that gives a focusing position having a longer distance from the optical center of the camera 30 than the focusing position at the time of capturing the secondary image and the focusing position at the time of capturing the tertiary image is set. For example, the focal length S1 is set as a value that allows infinity, a hyperfocal length, or pan-focus to be adjusted to the focusing position at the time of capturing the primary image, which is a so-called in-focus position.

As another aspect, at the time of capturing the primary image, the depth of field D1 deeper than depth of field D2 at the time of capturing the secondary image and depth of field D3 at the time of capturing the tertiary image is set. The reason why the depth of field D1 at the time of capturing the primary image is designated to be the highest value as described above has an aspect of reducing blur occurring in the primary image and eventually enhancing image quality, by capturing the primary image by focusing on subjects in all ranges of the near view, a middle view, and the distant view. Note that, although an example in which the depth of field is set has been given here as an example of the focus setting, since there is some characteristic that the depth of field can be controlled by a diaphragm value, which is a so-called F-value, or the focal length of the camera 30, the F-value or the focal length from which the depth of field D1 can be obtained may be set.

Under the situation in which the first focus setting is reflected in the camera 30 as described above, the first acquisition unit 11 acquires the primary image taken by the camera 30 via the network NW.

The face detection unit 12 is a processing unit that detects a face region R from an image. As a mere example, the face detection unit 12 can execute face detection on the primary image acquired by the first acquisition unit 11, the secondary image acquired by the second acquisition unit 14, and the tertiary image acquired by the third acquisition unit 16. In the following, an example in which a boundary of the face region on the image is detected as a rectangularly delimited region, or a so-called bounding box, will be given as a mere example. However, this is only for explanation, and the face region may be a region delimited by a polygon or an ellipse.

Here, the algorithm of "face detection" applied to the image by the face detection unit 12 may be optional. As a mere example, a convolutional neural network (CNN) generated by machine learning such as deep learning can be used for the face detection. As another example, a support vector machine (SMV) that outputs a face or non-face label with histograms of oriented gradients (HOG) features as input can also be used. Additionally, any face detection algorithm can be applied, such as using a discriminator based on the Haar-like feature or using techniques such as template matching and skin color detection.

The distance calculation unit 13 is a processing unit that calculates an estimated value of the distance to a specified subject. For example, the distance calculation unit 13 calculates an estimated value of the distance from the optical center of the camera 30 that takes the primary image to the face that is the subject, based on the size of the face region R detected from the primary image by the face detection unit 12.

In more detail, the distance calculation unit 13 refers to correspondence relationship data in which the correspondence relationship between the area of the face region and the distance from the optical center of the camera 30 to the face in the image taken by the camera 30 is defined, to calculate the distance corresponding to the area of the face region R in the primary image as the estimated value. The "area" mentioned here refers to the area of the face region when the real face rather than a counterfeit is captured, considering the aspect of achieving adjustment control of the focal length with which the real face is put in focus at the time of capturing the secondary image. For example, the area of the face region on the image taken by the camera 30 has an aspect of being proportional to the square of the distance from the optical center of the camera 30 to the face that is the subject. From this point, a quadratic curve obtained by approximating the above relationship by regression analysis such as a least squares method as an example can be used as the above-mentioned correspondence relationship data.

Here, when the distance is calculated from the primary image in which a counterfeit is captured, a gap is produced between the distance to the position where the counterfeit really exists and the distance calculated from the primary image. That is, the case where the face of a valid user is forged by a display object or the like has the aspect of having a high possibility that a display object having a size smaller than the size of the real face is forged. For example, when impersonation is performed by displaying a still image or a moving image of the face of a valid user on a display unit included in a smartphone, a tablet terminal, or the like, the size of the screen of the display unit is often smaller than the real face. Due to such a difference in size between the real object and the counterfeit, when impersonation is performed by a third party using the counterfeit, the counterfeit is made closer to the camera 30 than the position for when the real face is captured by the camera 30 and captured. Because of this as one reason, when the distance is calculated from the primary image in which the counterfeit is captured, the face region is evaluated to be exist at a position farther from the optical center of the camera 30 than the real existent position at which the counterfeit is held within the angle of view of the camera 30. In other words, when the distance is calculated from the primary image in which the counterfeit is captured, the distance calculated by the distance calculation unit 13 is overestimated compared with the actual distance between the camera 30 and the counterfeit.

Note that the above-described method for calculating the distance is merely an example, and other calculation methods may be used. For example, the correspondence relationship data in which the correspondence relationship between the height or width of the face region and the distance is defined can be used for calculation of the distance, while the distance may be calculated using another known technique.

The second acquisition unit 14 is a processing unit that acquires the secondary image. As a mere example, the second acquisition unit 14 sets a focal length S2 and the depth of field D2 exemplified below in the camera 30 as parameters relating to the focus setting used by the camera 30 at the time of capturing the secondary image. Hereinafter, the focus setting used at the time of capturing the secondary image will be sometimes referred to by the expression "second focus setting".

As one aspect, at the time of capturing the secondary image, the focal length S2 (< focal length S1) that gives a focusing position having a shorter distance from the optical center of the camera 30 than the focusing position at the time of capturing the primary image is set. In other words, the focal length S2 is set as a value that allows the estimated value of the distance calculated by the distance calculation unit 13 to be modified to the focusing position at the time of capturing the secondary image, which is a so-called in-focus position.

As another aspect, at the time of capturing the secondary image, the depth of field D2 (< depth of field D1) shallower than the depth of field D1 at the time of capturing the primary image is set. The reason why the depth of field D2 is set shallower than the depth of field D1 in this manner is to capture the secondary image so as to be more easily put out of focus at the time of capturing the counterfeit, considering the aspect of clarifying the difference in blur occurring in the secondary image between the time of capturing the real face and the time of capturing the counterfeit. Note that, as an example of the focus setting, the F-value or the focal length from which the depth of field D2 is obtained may be set here as well, instead of the depth of field.

Under the situation in which the second focus setting is reflected in the camera 30 as described above, the second acquisition unit 14 acquires the secondary image taken by the camera 30 via the network NW.

The blur calculation unit 15 is a processing unit that calculates an evaluation value of blur appearing in an image. As mere one aspect, the blur calculation unit 15 can calculate the evaluation value of blur in the secondary image acquired by the second acquisition unit 14, the evaluation value of blur in the tertiary image acquired by the third acquisition unit 16 to be described later, and the like.

When calculating the evaluation values of blur from these secondary image and tertiary image, the blur calculation unit 15 calculates the evaluation values of blur for each of the face region R and a background region corresponding to the region other than the face region R included in the secondary image or the tertiary image.

Hereinafter, an example in which the detection result for the face region R of the primary image is diverted as the detection results for the face regions of the secondary image and the tertiary image will be given as a mere example on the supposition that the position and dimensions are substantially the same between the face region R detected from the primary image and the face regions of the secondary image and the tertiary image. Note that, as a matter of course, the face detection does not necessarily have to be executed exclusively for the primary image, and the face detection may be executed for each of the primary image, the secondary image, and the tertiary image.

For example, the blur calculation unit 15 inputs pixel values in the face region R of the secondary image to a blur computing engine. This can obtain a computation result for an evaluation value Bf2 of blur in the face region R of the secondary image. The pixel values in the background region of the secondary image are also input to the blur computing engine. This can obtain a computation result for an evaluation value Bb2 of blur in the background region of the secondary image. Similarly to the secondary image, an evaluation value Bf3 of blur in the face region R of the tertiary image and an evaluation value Bb3 of blur in the background region of the tertiary image can be obtained.

The blur computing engine mentioned above can be any algorithm. For example, the degree of occurrence of blur in the face region and the background region can be evaluated based on a luminance gradient obtained from a differential image of the face region or the background region output by a spatial filter such as a Sobel filter. In addition, the degree of occurrence of blur in the face region and the background region can also be evaluated based on low frequency components in a spatial frequency region of the face region or the background region, a ratio of low frequency components and high frequency components, or the like. Additionally, the degree of occurrence of blur can also be evaluated by estimating parameters of a point spread function (PSF) of an image.

The third acquisition unit 16 is a processing unit that acquires the tertiary image. As a mere example, the third acquisition unit 16 sets a focal length S3 and the depth of field D3 exemplified below in the camera 30 as parameters relating to the focus setting used by the camera 30 at the time of capturing the tertiary image. Hereinafter, the focus setting used at the time of capturing the tertiary image will be sometimes referred to by the expression "third focus setting".

As one aspect, at the time of capturing the tertiary image, the focal length S3 (< focal length S2 < focal length S1) that gives a focusing position having a shorter distance from the optical center of the camera 30 than the focusing position at the time of capturing the primary image and the focusing position at the time of capturing the secondary image is set. The reason why the in-focus position is made closer to a front direction of the camera 30 than the in-focus position at the time of capturing the secondary image in this manner is to make the in-focus position closer to the real existent position where the counterfeit is held within the angle of view of the camera 30. This may make it possible to easily capture the tertiary image out of focus at the time of capturing the real face, and to easily capture the tertiary image in focus at the time of capturing the counterfeit.

As another aspect, at the time of capturing the tertiary image, the depth of field D3 (< depth of field D1) shallower than the depth of field D1 at the time of capturing the primary image is set. The reason why the depth of field D3 is set shallower than the depth of field D1 is to capture the tertiary image so as to be more easily put out of focus at the time of capturing the real face, considering the aspect of clarifying the difference in blur appearing in the tertiary image between the time of capturing the real face and the time of capturing the counterfeit. Note that, as an example of the focus setting, the F-value or the focal length from which the depth of field D3 is obtained may be set here as well, instead of the depth of field.

Under the situation in which the third focus setting is reflected in the camera 30 as described above, the third acquisition unit 16 acquires the tertiary image taken by the camera 30 via the network NW. Note that the capturing of the tertiary image does not necessarily have to be executed and may be executed exclusively when a specified condition is satisfied, such as when it is difficult to discriminate between a counterfeit and the real face (living body) only with the primary image and the secondary image. For example, the capturing of the tertiary image may be executed exclusively when the determination unit 17 to be described later determines that the evaluation value Bf2 of blur in the face region R of the secondary image is lower than a threshold value Th1.

The determination unit 17 is a processing unit that determines whether or not the subject is a counterfeit. As one aspect, the determination unit 17 determines whether or not the evaluation value Bf2 of blur in the face region R of the secondary image exceeds the threshold value Th1. At this time, when the evaluation value Bf2 of blur in the face region R of the secondary image exceeds the threshold value Th1, it is found that there is a high suspicion that the secondary image has been captured by bringing a counterfeit closer to the camera 30 than the position for when the real face is captured by the camera 30. In this case, the determination unit 17 determines that the subject corresponding to face region R is a "counterfeit". Note that, although an example in which the evaluation value Bf2 of blur in the face region R of the secondary image is used for the determination has been given here, the evaluation value of blur in the entire secondary image or the evaluation value Bb2 of blur in the background region of the secondary image may be used for the determination.

Meanwhile, when the evaluation value Bf2 of blur in the face region R of the secondary image does not exceed the threshold value Th1, the determination unit 17 further determines whether or not the evaluation value Bf2 of blur in the face region R of the secondary image exceeds a threshold value Th2 (< threshold Th1).

Then, when the evaluation value Bf2 of blur in the face region R of the secondary image does not exceed the threshold value Th2, the suspicion that the secondary image has been captured by bringing a counterfeit closer to the camera 30 than the position for when the real face is captured by the camera 30 disappears. In this case, the determination unit 17 determines that the subject corresponding to the face region R is the "living body (real object)".

In addition, when the evaluation value Bf2 of blur in the face region R of the secondary image exceeds the threshold value Th2, the suspicion that the secondary image has been captured by bringing a counterfeit closer to the camera 30 than the position for when the real face is captured by the camera 30 does not completely disappear. In this case, the determination unit 17 calculates a square difference Ball of difFerences in each of the evaluation value of blur in the face region and the evaluation value of blur in the background region between the secondary image and the tertiary image in accordance with following formula (1).

$$\text{Ball} = |(Bf2 - Bf3)2 - (Bb2 - Bb3)2| \ \dots \ (1)$$

After that, the determination unit 17 determines whether or not the above square difference Ball is equal to or lower than a threshold value Th3. This evaluates the difference in the amount of change in the face region and the background region between the secondary image and the tertiary image. Such evaluation is performed considering the aspect of evaluating the difference produced in the amount of change of blur in the face and the background between the case where a counterfeit is captured and the case where the real object of the living body is captured. That is, when a counterfeit is captured, since the face and the background are on the same flat plane, the amount of change of blur in the entire screen is the same (equal) between the secondary image and the tertiary image. In contrast to this, when the real object of the living body is captured, since there is a depth in the background, a difference is produced in the amount of change of blur.

At this time, when the square difference Ball is equal to or lower than the threshold value Th3, that is, when the square difference Ball does not exceed the threshold value Th3, since the difference in the amount of change of blur in the face and the background is small, it is found that there is a high suspicion that the face region and the background region exist on the same flat plane, that is, at equivalent distances from the optical center of the camera 30. In this case, the determination unit 17 determines that the subject corresponding to face region R is a "counterfeit". On the other hand, when the square difference Ball exceeds the threshold value Th3, the above two suspicions are solved. In this case, the determination unit 17 determines that the subject corresponding to the face region R is the "living body (real object)".

The determination result determined in this manner, that is, the "living body" or the "counterfeit" is output to the face authentication unit 18.

Note that, although an example in which the determination using the square difference Ball is executed when the threshold value Th1 is not exceeded in the determination using the evaluation value Bf2 of blur in the face region R of the secondary image has been given here, the two-stage determination does not necessarily have to be carried out. For example, only the determination using the square difference Ball may be executed without carrying out the determination using the evaluation value Bf2 of blur in the face region R of the secondary image. In addition, the determination using the evaluation value Bf2 of blur in the face region R of the secondary image may be executed when the determination using the square difference Ball does not exceed the threshold value Th3.

The face authentication unit 18 is a processing unit that executes face authentication. As one aspect, the face authentication unit 18 can execute the face authentication exclusively when the determination unit 17 determines the "living body". This may suppress impersonation by a third party using a counterfeit. When the face authentication is executed in this manner, the face authentication unit 18 can use at least one of the primary image, the secondary image, the tertiary image, and a combination thereof for the face authentication. For example, since the primary image has the highest image quality among the three images in terms of the aspect that blur is relatively small, a case where the primary image is used for face authentication will be explained below as a mere example.

As a mere example, by collating the feature of the face in the primary image and the feature of the face included in registration data (not illustrated), the face authentication unit 18 authenticates whether or not the face included in the primary image is of a valid user.

The "feature" mentioned here can be optional. In the following, a case where an embedding vector is used will be explained as a mere example of the feature of the face. In this case, a model in which an embedded space has been trained by deep learning or the like, such as a CNN, can be used. For example, the partial image corresponding to the face region R of the primary image is input to the CNN in which the embedded space has already been trained. This can obtain the embedding vector from the CNN. Note that the embedding vector is merely an example of the feature of the face, and another feature such as scale-invariant feature transform (SIFT) may be calculated, for example.

After the feature of the face is extracted from the primary image in this manner, the face authentication unit 18 collates the embedding vector of the face region R of the primary image and the embedding vector included in the registration data. As a mere example, the face authentication unit 18 determines whether or not the distance between the embedding vector of the face region R of the primary image and the embedding vector included in the registration data is equal to or lower than a predetermined threshold value. At this time, when the registration data contains an embedding vector whose distance to the embedding vector of the face region R of the primary image is equal to or lower than the threshold value, the face region R of the primary image is discriminated to be the face of a valid user. On the other hand, when the registration data contains no embedding vector whose distance to the embedding vector of the face region R of the primary image is equal to or lower than the threshold value, the face region R of the primary image is discriminated not to be the face of a valid user.

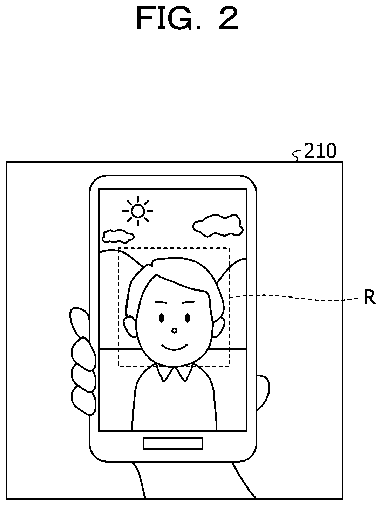

Next, an example of determination of a counterfeit will be given. FIG. 2 is a diagram illustrating an example of the primary image. As a mere example, FIG. 2 illustrates an example in which impersonation is performed in which a tablet terminal in which a bust-up still image of a valid user is displayed on a screen is held over the camera 30 as a counterfeit. Note that FIG. 2 illustrates an example in which the outer frame of the housing of the tablet terminal, the hand holding the housing, and the like are visible in a primary image 210, considering the aspect of schematically illustrating how impersonation is going on, but as a matter of course, the outer frame of the housing and the hand do not necessarily have to be visible in the primary image 210.

The primary image 210 is captured by the camera 30 under the first focus setting in which the focal length S1 and the depth of field D1 are set. This captures the primary image 210 in a state put in focus on subjects in all ranges of the near view, the middle view, and the distant view, by adjusting the in-focus position to infinity, the hyperfocal length, or the pan-focus.

Therefore, as illustrated in FIG. 2, the primary image 210 having a small blur is acquired in the entire primary image 210 including the face region R and the background region other than the face region R.

When the primary image 210 is acquired, the estimated value of the distance to the subject corresponding to the face region R in the primary image 210 is calculated based on the size of the face region R of the primary image 210.

Here, when the distance is calculated from the primary image 210 in which a counterfeit is captured, a gap is produced between the distance to the position where the counterfeit really exists and the distance calculated from the primary image 210.

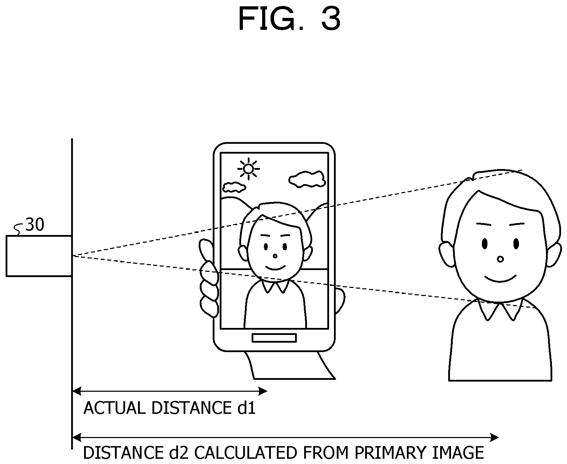

FIG. 3 is a schematic diagram illustrating an example of a distance gap. FIG. 3 schematically illustrates a distance d1 to the position where the counterfeit really exists and a distance d2 calculated from the primary image 210 illustrated in FIG. 2. As illustrated in FIG. 3, the primary image 210 is captured by bringing the counterfeit closer to the camera 30 than the position for when the real face is captured by the camera 30. Because of this as one reason, when the distance is calculated from the primary image 210, the face region is evaluated to be exist at a position farther from the optical center of the camera 30 than the real existent position at which the counterfeit is held within the angle of view of the camera 30. In other words, the distance d2 calculated from the primary image 210 is overestimated over the actual distance between the camera 30 and the counterfeit.

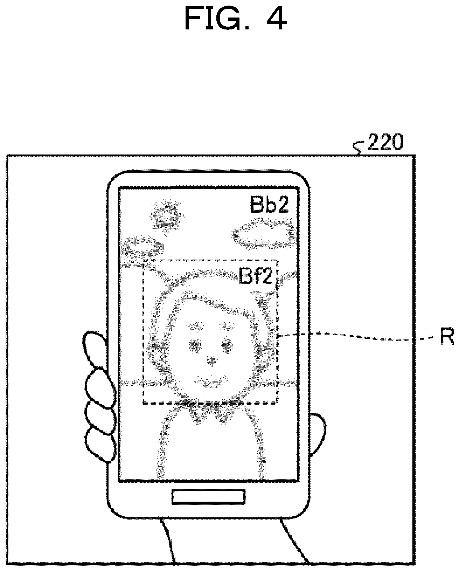

The second focus setting in which the focal length S2 and the depth of field D2 are set based on the distance d2 calculated in this manner is reflected in the camera 30. For example, when the second focus setting is made, the in-focus position of the camera 30 is adjusted to the position corresponding to the distance d2, while the subject existing at a distance nearer than or more distant than the distance d2 is easily put out of focus. Under such second focus setting, a secondary image 220 illustrated in FIG. 4 is captured.

FIG. 4 is a diagram illustrating an example of the secondary image. As illustrated in FIG. 4, the secondary image 220 having a large blur in the entire secondary image 220 including the face region R and the background region other than the face region R is acquired because of the gap between the distances d1 and d2 illustrated in FIG. 3, as one reason. Here, one reason why blur is uniformly large in both of the face region R and the background region is that the face region and the background region exist on the same flat plane when a still image such as a photograph is used as a counterfeit.

Thereafter, it is determined whether or not the evaluation value Bf2 of blur in the face region R of the secondary image 220 exceeds the threshold value Th1. With such determination, the secondary image 220 captured out of focus due to the distance gap illustrated in FIG. 3 can be determined to be a "counterfeit".

In addition, a tertiary image 230 is captured by the camera 30 under the third focus setting in which the focal length S3 and the depth of field D3 are set. That is, the tertiary image 230 is captured in a state put in focus on a position corresponding to a distance closer to the front direction of the camera 30 than the distance d2 corresponding to the in-focus position at the time of capturing the secondary image, such as the distance d1, or the vicinity of the position.

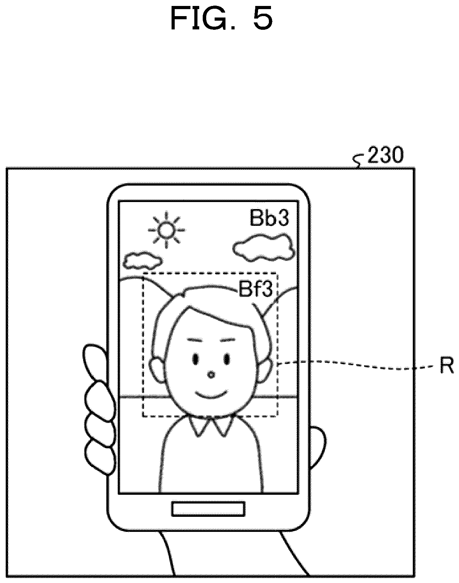

As a result, the tertiary image 230 will be captured in a state put in focus on the distance d1 corresponding to the real existent position where the counterfeit is held within the angle of view of the camera 30. FIG. 5 is a diagram illustrating an example of the tertiary image. As illustrated in FIG. 5, the tertiary image 230 having a small blur in the entire tertiary image 230 including the face region R and the background region is acquired.

Thereafter, the square difference Ball of difFerences in each of the evaluation value of blur in the face region and the evaluation value of blur in the background region between the secondary image and the tertiary image is calculated. After that, it is determined whether or not the square difference Ball exceeds the threshold value Th3. Also in such determination, the tertiary image 230 in which it is suspected that the subject corresponding to the face region R is brought closer to the camera 30 than at the time of capturing the real object and it is highly suspected that the face region and the background region exist on the same flat plane can be determined to be a "counterfeit".

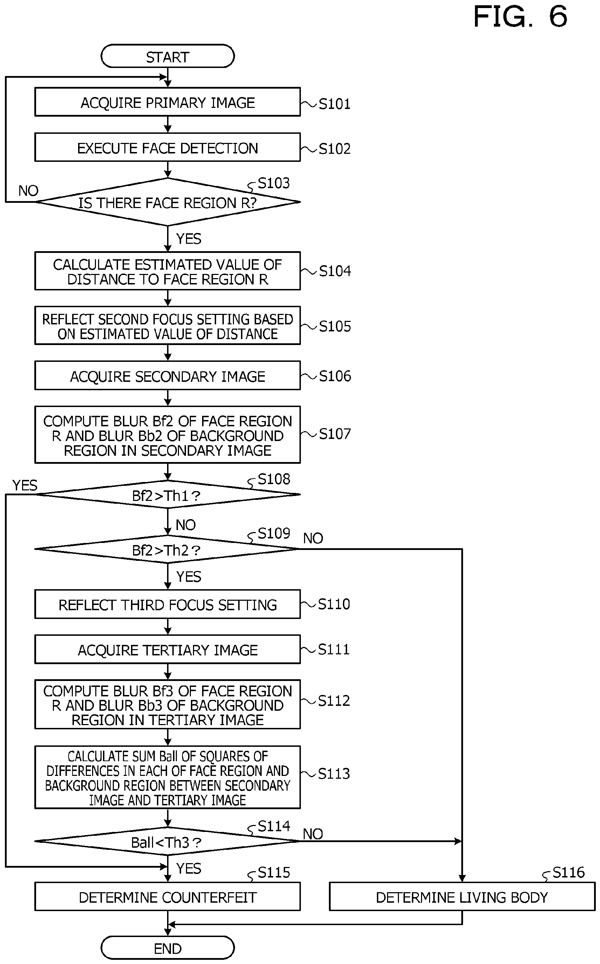

FIG. 6 is a flowchart illustrating a procedure of determination processing according to the first embodiment. The processing illustrated in FIG. 6 can be repeatedly executed at a frame rate of the camera 30 or at a fixed cycle as a mere example.

As illustrated in FIG. 6, the first acquisition unit 11 acquires the primary image captured by the camera 30 to which the first focus setting including the focal length S1 (> S2 > S3) and the depth of field D1 (> D2 or D3) is applied (step S101). Then, the face detection unit 12 detects the face region R from the primary image acquired in step S101 (step S102). Note that, when the face region R is not included in the primary image (No in step S103), the processing proceeds to step S101.

At this time, when the face region R is included in the primary image (Yes in step S103), the distance calculation unit 13 executes the processing as follows. That is, the distance calculation unit 13 calculates the estimated value of the distance from the optical center of the camera 30 to the subject corresponding to the face region R, based on the size of the face region R detected in step S102 (step S104).

Subsequently, the second acquisition unit 14 applies, to the camera 30, the second focus setting including the focal length S2 (< S1) and the depth of field D2 (< D1) that allows the estimated value of the distance calculated in step S104 to be modified to the in-focus position at the time of capturing the secondary image (step S105).

After that, the second acquisition unit 14 acquires the secondary image taken by the camera 30 to which the second focus setting is applied in step S105, via the network NW (step S106). Subsequently, the blur calculation unit 15 calculates the evaluation value Bf2 of blur in the face region R of the secondary image and the evaluation value Bb2 of blur in the background region of the secondary image (step S107).

Then, the determination unit 17 determines whether or not the evaluation value Bf2 of blur in the face region R of the secondary image calculated in step S107 exceeds the threshold value Th1 (step S108).

At this time, when the evaluation value Bf2 of blur in the face region R of the secondary image exceeds the threshold value Th1 (Yes in step S108), it is found that there is a high suspicion that the secondary image has been captured by bringing a counterfeit closer to the camera 30 than the position for when the real face is captured by the camera 30. In this case, the determination unit 17 determines that the subject corresponding to face region R is a "counterfeit" (step S115) and ends the processing.

On the other hand, when the evaluation value Bf2 of blur in the face region R of the secondary image does not exceed the threshold value Th1 (No in step S108), the determination unit 17 further determines whether or not the evaluation value Bf2 of blur in the face region R of the secondary image exceeds the threshold value Th2 (< threshold Th1) (step S109).

Then, when the evaluation value Bf2 of blur in the face region R of the secondary image does not exceed the threshold value Th2 (No in step S109), the suspicion that the secondary image has been captured by bringing a counterfeit closer to the camera 30 than the position for when the real face is captured by the camera 30 disappears. In this case, the determination unit 17 determines that the subject corresponding to face region R is the "living body (real object)" (step S116) and ends the processing.

In addition, when the evaluation value Bf2 of blur in the face region R of the secondary image exceeds the threshold value Th2 (Yes in step S109), the suspicion that the secondary image has been captured by bringing a counterfeit closer to the camera 30 than the position for when the real face is captured by the camera 30 does not completely disappear. In this case, the third acquisition unit 16 applies the third focus setting including the focal length S3 (< S2 < S1) and the depth of field D3 (< D1) to the camera 30 (step S110).

Then, the third acquisition unit 16 acquires the tertiary image taken by the camera 30 to which the third focus setting is applied in step S110, via the network NW (step S111). Subsequently, the blur calculation unit 15 calculates the evaluation value Bf3 of blur in the face region R of the tertiary image and the evaluation value Bb3 of blur in the background region of the tertiary image (step S112).

Thereafter, the determination unit 17 calculates the square difference Ball of difFerences in each of the evaluation value of blur in the face region and the evaluation value of blur in the background region between the secondary image and the tertiary image in accordance with above formula (1) (step S113). After that, the determination unit 17 determines whether or not the square difference Ball calculated in step S113 is equal to or lower than the threshold value Th3 (step S114).

Here, when the square difference Ball is equal to or lower than the threshold value Th3, that is, when the square difference Ball does not exceed the threshold value Th3 (Yes in step S114), it is found that there is a high suspicion that the face region and the background region exist on the same flat plane, that is, at equivalent distances from the optical center of the camera 30. In this case, the determination unit 17 determines that the subject corresponding to face region R is a "counterfeit" (step S115) and ends the processing.

On the other hand, when the square difference Ball exceeds the threshold value Th3 (No in step S114), the above two suspicions are solved. In this case, the determination unit 17 determines that the subject corresponding to face region R is the "living body (real object)" (step S116) and ends the processing.

As described above, the information processing device 10 according to the present embodiment calculates the distance to the subject included in the image captured first and determines whether or not the subject is a counterfeit, based on the evaluation value of blur produced in the second image captured by focusing on the calculated distance. In this manner, the gap produced between the distance calculated from the first image at the time of capturing the counterfeit and the distance to the position where the counterfeit really exists is used for determination of a counterfeit. For this reason, determination of a counterfeit may be achieved without depending on whether or not the counterfeit is displayed with high resolution. Therefore, according to the information processing device 10 according to the present embodiment, improvement of the determination accuracy for a counterfeit may be achieved.

[Second Embodiment]

Incidentally, while the embodiment relating to the disclosed device has been described above, the present invention may be carried out in a variety of different modes apart from the embodiment described above. Thus, in the following, other embodiments included in the present invention will be described.

In the above first embodiment, although an example in which the primary image is used for the face authentication has been given, another image, the secondary image, or the tertiary image may be used for the face authentication, or two or more images among these three images can be used for the face authentication. For example, the secondary image can be used for the face authentication. In this case, the secondary image acquired by the second acquisition unit 14 can also be directly input to the face authentication unit 18. In this case, since the secondary image having large blur is used for the face authentication at the time of capturing the counterfeit, the similarity score with the registration data decreases in the collation at the time of the face authentication, and the collation result is failed. Accordingly, it is possible to skip the determination of the counterfeit and automatically reject the secondary image in which the counterfeit is captured.

In addition, in the above first embodiment, the determination using the evaluation value Bf2 of blur in the face region R of the secondary image, the determination using the square difference Ball, and the like have been explained, but the counterfeit can be recognized by determination other than the above. For example, the counterfeit can be determined based on the evaluation value Bf2 of blur in the face region of the secondary image and the evaluation value Bb2 of blur in the background region of the secondary image. As a mere example, when the sum of the evaluation value Bf2 of blur and the evaluation value Bb2 of blur exceeds a threshold value Th4, it is determined as a counterfeit, whereas it is determined as the living body when the sum does not exceed the threshold value Th4. Additionally, the counterfeit can be determined based on the evaluation value Bf3 of blur in the face region of the tertiary image and the evaluation value Bb3 of blur in the background region of the tertiary image. As a mere example, when the sum of the evaluation value Bf3 of blur and the evaluation value Bb3 of blur is lower than a threshold value Th5, it is determined as a counterfeit, whereas it is determined as the living body when the sum is not lower than the threshold value Th5.

In the above first embodiment, an example in which the above determination function is packaged in the above face authentication service has been given, but the above determination function can also be applied to other services apart from the face authentication service. For example, application to monitoring services with an intercom camera and a surveillance camera is possible. For example, it is also possible to output a determination result for a counterfeit as a monitoring result for an image captured by an intercom camera or a surveillance camera.

In addition, each of the illustrated constituent members in each of the devices is not necessarily have to be physically configured as illustrated in the drawings. That is, specific modes of distribution and integration of each device are not limited to those illustrated, and the whole or a part of each device can be configured by being functionally or physically distributed and integrated in any unit, according to various loads, use situations, and the like. For example, the first acquisition unit 11, the face detection unit 12, the distance calculation unit 13, the second acquisition unit 14, the blur calculation unit 15, the third acquisition unit 16, the determination unit 17, or the face authentication unit 18 may be coupled through a network as an external device of the information processing device 10. In addition, each of different devices may include the first acquisition unit 11, the face detection unit 12, the distance calculation unit 13, the second acquisition unit 14, the blur calculation unit 15, the third acquisition unit 16, the determination unit 17, or the face authentication unit 18 and may be coupled to a network to cooperate with each other, whereby the functions of the information processing device 10 described above may be achieved.

[Determination Program]

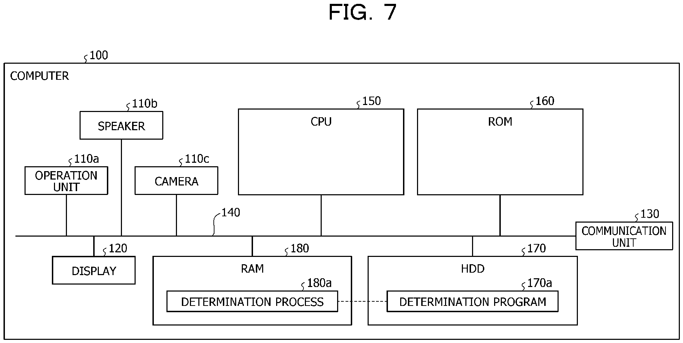

In addition, various types of processing described in the embodiments described above can be achieved by executing a program prepared in advance in a computer such as a personal computer or a workstation. Thus, hereinafter, an example of a computer that executes the determination program having functions similar to the functions in the first and second embodiments will be described with reference to FIG. 7.

FIG. 7 is a diagram illustrating a hardware configuration example. As illustrated in FIG. 7, a computer 100 includes an operation unit 110a, a speaker 110b, a camera 110c, a display 120, and a communication unit 130. Furthermore, this computer 100 includes a CPU 150, a read only memory (ROM) 160, a hard disk drive (HDD) 170, and a RAM 180. These units 110 to 180 are coupled to each other via a bus 140.

As illustrated in FIG. 7, the HDD 170 stores a determination program 170a that exhibits functions similar to the functions of the first acquisition unit 11, the face detection unit 12, the distance calculation unit 13, the second acquisition unit 14, the blur calculation unit 15, the third acquisition unit 16, and the determination unit 17 illustrated in the above first embodiment. This determination program 170a may be integrated or separated similarly to each constituent member, namely, the first acquisition unit 11, the face detection unit 12, the distance calculation unit 13, the second acquisition unit 14, the blur calculation unit 15, the third acquisition unit 16, and the determination unit 17 illustrated in FIG. 1. That is, all pieces of data indicated in the above first embodiment do not necessarily have to be stored in the HDD 170, and it is sufficient that data for use in processing is stored in the HDD 170.

Under such an environment, the CPU 150 reads the determination program 170a from the HDD 170 and then loads the read determination program 170a into the RAM 180. As a result, the determination program 170a functions as a determination process 180a as illustrated in FIG. 7. This determination process 180a loads various types of data read from the HDD 170 into a region allocated to the determination process 180a in the storage region included in the RAM 180 and executes various types of processing, using these various types of loaded data. For example, as an example of the processing to be executed by the determination process 180a, the processing illustrated in FIG. 6, and the like are included. Note that all the processing units indicated in the first embodiment described above do not necessarily have to operate in the CPU 150, and it is sufficient that a processing unit corresponding to processing to be executed is virtually achieved.

Note that the determination program 170a described above does not necessarily have to be stored in the HDD 170 or the ROM 160 from the beginning. For example, each program is stored in a "portable physical medium" to be inserted into the computer 100, such as a flexible disk, which is a so-called FD, a compact disc read only memory (CD-ROM), a digital versatile disc (DVD) disk, a magneto-optical disk, or an integrated circuit (IC) card. Then, the computer 100 may acquire each program from these portable physical media to execute each acquired program. In addition, each program may be stored in another computer, a server device, or the like coupled to the computer 100 via a public line, the Internet, a LAN, a wide area network (WAN), or the like, and the computer 100 may acquire and execute each program from such another computer, server device, and the like.

CITATION LIST

PATENT DOCUMENT

Patent Document 1: Japanese Laid-open Patent Publication No. 2007-280367

REFERENCE SIGNS LIST

10 Information processing device
11 First acquisition unit
12 Face detection unit
13 Distance calculation unit
14 Second acquisition unit
15 Blur calculation unit
16 Third acquisition unit
17 Determination unit
18 Face authentication unit
30 Camera

**Claims**

1. A determination method implemented by a computer, the determination method comprising:

   in response to acquiring a primary image captured by a camera, calculating, based on a size of a region of the subject, an estimated value of a distance to a subject that is specified and included in the primary image;
   acquiring a secondary image captured by the camera focused on a position according to the calculated estimated value; and
   determining, based on the acquired secondary image, whether the subject is a display object.

2. The determination method according to claim 1, wherein
   the acquiring includes acquiring the secondary image captured by the camera in which second depth of field shallower than first depth of field set in the camera at a time of capturing the primary image is set.

3. The determination method according to claim 1, wherein

the determining includes determining whether or not the subject is the display object, by depending on whether or not an evaluation value of blur that occurs in the region of the subject in the secondary image exceeds a threshold value.

4. The determination method according to claim 1, wherein

   the acquiring includes further acquiring a tertiary image captured by the camera focused on the position nearer to the camera than the position according to the estimated value, and
   the determining includes determining whether or not the subject is the display object, based on the secondary image and the tertiary image.

5. The determination method according to claim 4, wherein
   the determining includes determining whether the subject is the display object, based on a difference between an evaluation value of blur that occurs in the region of the subject in the secondary image and the evaluation value of the blur that occurs in the region of the subject in the tertiary image, and a difference between the evaluation value of the blur that occurs in an alternative region other than the region of the subject in the secondary image and the evaluation value of the blur that occurs in the alternative region in the tertiary image.

6. The determination method according to claim 4, wherein
   the acquiring includes executing acquisition of the tertiary image when an evaluation value of blur that occurs in the region of the subject in the secondary image does not exceed a threshold value.

7. A determination program for causing a computer to perform processing comprising:

   when acquiring a primary image captured by a camera, calculating an estimated value of a distance to a subject that is specified and included in the primary image, based on a size of a region of the subject;
   acquiring a secondary image captured by the camera focused on a position according to the calculated estimated value; and
   determining whether or not the subject is a display object, based on the acquired secondary image.

8. The determination program according to claim 7, wherein
   the acquiring includes acquiring the secondary image captured by the camera in which second depth of field shallower than first depth of field set in the camera at a time of capturing the primary image is set.

9. The determination program according to claim 7, wherein
the determining includes determining whether or not the subject is the display object, by depending on whether or not an evaluation value of blur that occurs in the region of the subject in the secondary image exceeds a threshold value.

10. The determination program according to claim 7, wherein

the acquiring includes further acquiring a tertiary image captured by the camera focused on the position nearer to the camera than the position according to the estimated value, and
the determining includes determining whether or not the subject is the display object, based on the secondary image and the tertiary image.

11. The determination program according to claim 10, wherein
the determining includes determining whether or not the subject is the display object, based on a difference between an evaluation value of blur that occurs in the region of the subject in the secondary image and the evaluation value of the blur that occurs in the region of the subject in the tertiary image, and a difference between the evaluation value of the blur that occurs in an alternative region other than the region of the subject in the secondary image and the evaluation value of the blur that occurs in the alternative region in the tertiary image.

12. The determination program according to claim 10, wherein
the acquiring includes executing acquisition of the tertiary image when an evaluation value of blur that occurs in the region of the subject in the secondary image does not exceed a threshold value.

13. An information processing apparatus comprising:

a calculation unit that calculates, in response to acquiring a primary image captured by a camera, an estimated value of a distance to a subject that is specified and included in the primary image, based on a size of a region of the subject;
an acquisition unit that acquires a secondary image captured by the camera focused on a position according to the calculated estimated value; and
a determination unit that determines, based on the acquired secondary image, whether the subject is a display object.

14. The information processing apparatus according to claim 13, wherein
the acquisition unit that acquires the secondary image captured by the camera in which second depth of field shallower than first depth of field set in the camera at a time of capturing the primary image is set.

15. The information processing apparatus according to claim 13, wherein
the determination unit determines whether the subject is the display object, by depending on whether or not an evaluation value of blur that occurs in the region of the subject in the secondary image exceeds a threshold value.

16. The information processing apparatus according to claim 13, wherein

the acquisition unit further acquires a tertiary image captured by the camera focused on the position nearer to the camera than the position according to the estimated value, and
the determination unit determines whether the subject is the display object, based on the secondary image and the tertiary image.

17. The information processing apparatus according to claim 16, wherein
the determination unit determines whether the subject is the display object, based on a difference between an evaluation value of blur that occurs in the region of the subject in the secondary image and the evaluation value of the blur that occurs in the region of the subject in the tertiary image, and a difference between the evaluation value of the blur that occurs in an alternative region other than the region of the subject in the secondary image and the evaluation value of the blur that occurs in the alternative region in the tertiary image.

18. The information processing apparatus according to claim 16, wherein
the acquisition unit executes acquisition of the tertiary image when an evaluation value of blur that occurs in the region of the subject in the secondary image does not exceed a threshold value.

FIG. 1

CAMERA ~30

NW

INFORMATION PROCESSING DEVICE ~10

FIRST ACQUISITION UNIT ~11

DISTANCE CALCULATION UNIT ~13

FACE DETECTION UNIT ~12

BLUR CALCULATION UNIT ~15

SECOND ACQUISITION UNIT ~14

THIRD ACQUISITION UNIT ~16

DETERMINATION UNIT ~17

FACE AUTHENTICATION UNIT ~18

# FIG. 2

# FIG. 3

ACTUAL DISTANCE d1

DISTANCE d2 CALCULATED FROM PRIMARY IMAGE

# FIG. 4

# FIG. 5

# FIG. 6

```
                    START

           ACQUIRE PRIMARY IMAGE          ~S101

           EXECUTE FACE DETECTION         ~S102

   NO                                     S103
   ◁——    IS THERE FACE REGION R?
                      │
                    YES

        CALCULATE ESTIMATED VALUE OF      ~S104
          DISTANCE TO FACE REGION R

        REFLECT SECOND FOCUS SETTING BASED ~S105
          ON ESTIMATED VALUE OF DISTANCE

          ACQUIRE SECONDARY IMAGE         ~S106

        COMPUTE BLUR Bf2 OF FACE REGION
        R AND BLUR Bb2 OF BACKGROUND      ~S107
          REGION IN SECONDARY IMAGE

   YES                                    S108
   ◁——           Bf2>Th1?
                      │
                     NO
                                          S109    NO
                   Bf2>Th2?                       ——▷
                      │
                    YES

          REFLECT THIRD FOCUS SETTING     ~S110

          ACQUIRE TERTIARY IMAGE          ~S111

        COMPUTE BLUR Bf3 OF FACE REGION
        R AND BLUR Bb3 OF BACKGROUND      ~S112
           REGION IN TERTIARY IMAGE

        CALCULATE SUM Ball OF SQUARES OF
        DIFFERENCES IN EACH OF FACE REGION AND ~S113
        BACKGROUND REGION BETWEEN SECONDARY
           IMAGE AND TERTIARY IMAGE

                                          S114    NO
                  Ball<Th3?                       ——▷
                      │
                    YES                           S116
     S115
   DETERMINE COUNTERFEIT         DETERMINE LIVING BODY

                      END
```

FIG. 7

100
COMPUTER

110b
SPEAKER

150
CPU

160
ROM

110a
OPERATION UNIT

110c
CAMERA

140

130
COMMUNICATION UNIT

120
DISPLAY

180
RAM

180a
DETERMINATION PROCESS

170
HDD

170a
DETERMINATION PROGRAM

**INTERNATIONAL SEARCH REPORT**

International application No.

PCT/JP2020/047561

### A. CLASSIFICATION OF SUBJECT MATTER
Int.Cl. G06T7/00(2017.01)i
FI: G06T7/00510F

According to International Patent Classification (IPC) or to both national classification and IPC

### B. FIELDS SEARCHED
Minimum documentation searched (classification system followed by classification symbols)
Int.Cl. G06T7/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-280367 A (OMRON CORPORATION) 25 October 2007 (2007-10-25), paragraphs [0048]-[0051] | 1-3, 7-9, 13-15<br>4-6, 10-12,<br>16-18 |
| Y<br>A | JP 2009-69551 A (SONY CORPORATION) 02 April 2009 (2009-04-02), paragraph [0059] | 1-3, 7-9, 13-15<br>4-6, 10-12,<br>16-18 |
| A | JP 2014-219704 A (SECOM CO., LTD.) 20 November 2014 (2014-11-20), paragraphs [0045]-[0048] | 1-18 |
| A | JP 2009-21893 A (SANYO ELECTRIC CO., LTD.) 29 January 2009 (2009-01-29), paragraphs [0027]-[0044] | 1-18 |
| A | KR 10-2014-0094378 A (LG ELECTRONICS INC.) 30 July 2014 (2014-07-30), paragraphs [0133]-[0144], fig. 4, 5 | 1-18 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 February 2021 | 22 February 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT
Information on patent family members

International application No.

PCT/JP2020/047561

| | | |
|---|---|---|
| JP 2007-280367 A | 25 October 2007 | (Family: none) |
| JP 2009-69551 A | 02 April 2009 | US 2009/0073304 A1<br>paragraph [0077]<br>EP 2037320 A1<br>CN 101387732 A<br>BR PI0803678 A2<br>RU 2008136813 A |
| JP 2014-219704 A | 20 November 2014 | (Family: none) |
| JP 2009-21893 A | 29 January 2009 | (Family: none) |
| KR 10-2014-0094378 A | 30 July 2014 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007280367 A